Europäisches Patentamt

European Patent Office

Office européen des brevets

(19)

(11) Veröffentlichungsnummer : **0 438 997 B1**

# (12) EUROPÄISCHE PATENTSCHRIFT

(45) Veröffentlichungstag der Patentschrift :
**02.09.92 Patentblatt 92/36**

(51) Int. Cl.$^5$ : **B27L 7/00**, B23Q 5/54

(21) Anmeldenummer : **90890309.9**

(22) Anmeldetag : **27.11.90**

(54) Bedienungsvorrichtung eines Bearbeitungsgerätes.

(30) Priorität : **24.01.90 AT 159/90**

(43) Veröffentlichungstag der Anmeldung :
**31.07.91 Patentblatt 91/31**

(45) Bekanntmachung des Hinweises auf die
Patenterteilung :
**02.09.92 Patentblatt 92/36**

(84) Benannte Vertragsstaaten :
**CH DE GB LI**

(56) Entgegenhaltungen :
**DE-A- 3 011 496**
**DE-C- 681 905**
**US-A- 2 190 902**
**US-A- 2 473 167**
**US-A- 3 728 498**
**US-A- 4 787 661**

(73) Patentinhaber : **POSCH
LANDMASCHINENBAU Gesellschaft m.b.H.
Paul-Anton-Keller-Strasse 40
A-8430 Leibnitz-Kaindorf (AT)**

(72) Erfinder : **Posch, Heinz Peter
Seggauberg 147
A-8430 Leibnitz (AT)**

(74) Vertreter : **Brauneiss, Leo, Dipl.Ing. et al
Patentanwälte Dipl.-Ing. Leo Brauneiss,
Dipl.-Ing. Dr. Helmut Wildhack Postfach 281
Landstrasser Hauptstrasse 50
A-1030 Wien (AT)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

## Beschreibung

Die Erfindung betrifft eine Bearbeitungseinrichtung, insbesondere Trenn- bzw. Spalteinrichtung, vorzugsweise für Holzstücke, mit einer angetriebenen, einen Arbeitshub vollführenden Bearbeitungseinheit, insbesondere Spalteinheit, vorzugsweise einem Spaltkeil, einer Auflage, insbesondere einer(m) Spaltauflage bzw. -tisch, und Auslöse- bzw bzw. Schalteinrichtungen für die Antriebseinheit der Bearbeitungseinheit.

Eine Spalteinrichtung ähnlicher Art ist aus der USPS 4561479 bekannt. Diese Spalteinrichtung ist jedoch konstruktiv aufwendig und unbequem zu bedienen.

Ziel der Erfindung ist die Erstellung einer Spalteinrichtung, die möglichst betriebssicher ist und deren Bedienbarkeit verbessert ist.

Dieses Ziel wird bei einer Spalteinrichtung der eingangs genannten Art erfindungsgemäß dadurch erreicht, daß die Bearbeitungseinrichtung, insbesondere Spalteinrichtung, zwei bewegbare Griffe für die Bedienungsperson zur Halterung des zu bearbeitendenMaterialteiles, insbesondere des zu zerkleinernden Holzstückes, aufweist, die gleichzeitig als Auslöseeinrichtungen für die Hubbewegung, insbesondere Spaltbewegung, der Bearbeitungseinheit, insbesondere Spalteinheit, ausgebildet sind. Die Spaltbewegung der Spalteinheit kann dabei z.B. durch Schließen oder Verstellen eines Kontaktes, Verstellstiftes od.dgl. auslösbar sein.

Mit dieser erfindungsgemäßen Ausgestaltung der Spalteinrichtung wird erreicht, daß das Holzstück mit den Griffen von der Bedienungsperson erfaßt bzw. gehalten werden kann, wobei die Bedienungsperson mit jeweils einer Hand einen Griff halten muß, wobei gleichzeitig die Auslösung der Bewegung der Spalteinheit mit den beiden Griffen erfolgt, wenn beide Griffe gleichzeitig eine bestimmte Position erreicht haben, was jedoch nur erfolgen kann, wenn mit jeder Hand ein Griff gehalten wird, womit die Gefahr beseitigt ist, daß mit einer Hand in den Verstellbereich der Spalteinheit gegriffen werden kann. Es werden somit gleichzeitig eine Schutzfunktion und ein einfacher Aufbau erreicht.

Besonders vorteilhaft ist es, wenn im Betrieb bzw. während des Spalthubes, z.B. durch Verstellen eines der Griffe, die Einschaltbedingung, nämlich die Anordnung der Griffe in einer bestimmten Stellung wegfällt, sofort der Spalthub unterbrochen wird und die Spalteinheit stillgesetzt oder in ihre Ausgangsstellung rückgeführt wird.

Zum Ergreifen des zu spaltenden Holzstückes ist es vorteilhaft, wenn jeder Griff auf einem Lagerteil bzw. - rohr um seine Längsachse verdrehbar gelagert ist. Wenn gleichzeitig vorgesehen ist, daß die Griffe Halteeinrichtungen zur Halterung der Holzstücke tragen, kann mit den verdrehbaren Griffen eine beliebige Positionierung des Holzstückes im Bezug auf die Spalteinheit erreicht werden. Dabei ist es ferner vorteilhaft, wenn jeder Griff auf seinem Lagerteil ausziehbar bzw. einschiebbar gelagert ist.

Eine vorteilhafte bauliche Ausführungsform ergibt sich, wenn die Griffe mit ihren Lagerteilen um eine im wesentlichen horizontale Schwenkachse höhenverschwenkbar gelagert sind, wobei es darüberhinaus noch zweckmäßig ist, wenn die Griffe mit ihren Lagerteilen jeweils um eine senkrecht zu
dieser Schwenkachse verlaufende Achse aufeinander zu verschwenkbar gelagert sind.

Die Griffe sind um ihre Achse drehbar und in vertikaler und horizontaler Richtung frei schwenkbar angeordnet und können zudem noch eingeschoben
bzw. ausgezogen werden, wodurch man sämtliche Freiheitsgrade zur Positionierung der zu spaltenden Holzstücke erreicht.

Erfindungsgemäß ist ferner vorgesehen, daß im unteren Schwenkbereichsende der Griffe die Einschalteinrichtung für die Spalteinheit auslösbar ist. In dieser unteren Endstellung soll das Holzstück auf dem Auflagetisch in der gewünschten Positionierung aufliegen und die Einrichtung wird in Betrieb gesetzt.

Es sind verschiedene Möglichkeiten denkbar, wie die Griffe in dieser Position das Einschalten der Spalteinheit bewerkstelligen können. Es sind z.B. Endkontakte bzw. -schalter einsetzbar, die einen elektrischen Stromkreis schließen, welcher den Spalteinheitsantrieb einschaltet oder von den Griffen betätigbare Hydraulikventile, welche den Kreislauf der Hydraulikflüssigkeit für die Spalteinheit schließen oder andere Schalteinrichtungen.

Eine bevorzugte Ausführungsform der Erfindung sieht vor, daß die Einschalteinrichtung für die Spalteinheit nur dann schaltbar ist, wenn sich diese beiden Griffe gleichzeitig im unteren Endbereich ihres Schwenkweges befinden. Dazu ist vorgesehen, daß jeder Lagerteil auf einem Rohr bzw. einer Welle schwenkbar befestigt ist, wobei das eine Rohr in dem anderen Rohr verschwenkbar geelagert ist und das äußere Rohr in einem Lager am Gestell der Salteinrichtung um die horizontale Schwenkachse verschwenkbar ist und daß an jedem Rohr eine Schaltstange bzw. ein Nocken ausgebildet bzw. befestigt ist, mit denen jeweils ein, insbesondere vertikal verlaufender, Schaltstab verstellbar bzw. betätigbar ist, dessen unteres Ende jeweils mit einem Ende eine im wesentlichen waagrecht verlaufenden Wippe zusammenwirkt, insbesondere mit diesem gelenkig verbunden ist, wobei die Wippe in ihrem mittleren Bereich verdrehbar auf einem höhenverstellbaren Schaltstift bzw. -zapfen für die Antriebseinrichtung der Spalteinheit gelagert ist. Auf diese einfache Art ist sichergestellt, daß nur wenn sich beide Griffe in der vorbestimmten unteren Endposition befinden, die Spalteinheit in Tätigkeit gesetzt werden kann.

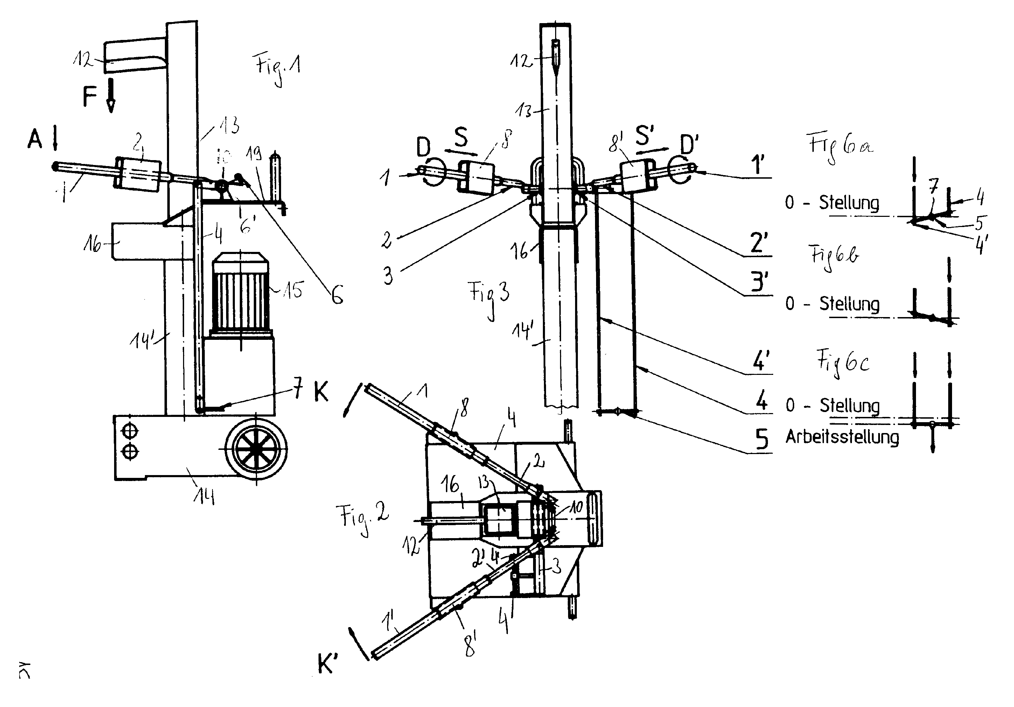

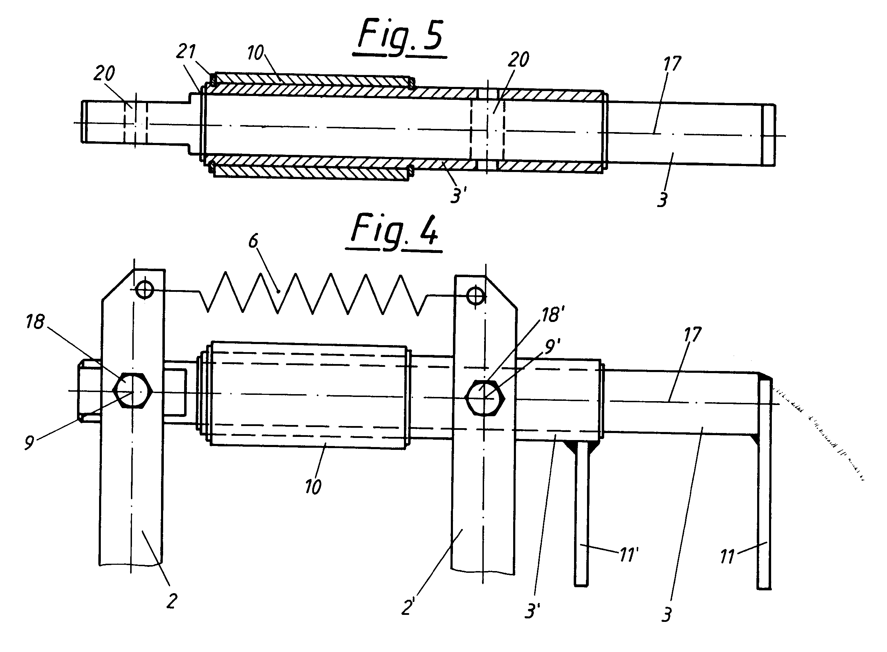

Im folgenden wird die Erfindung anhand der Zeichnung näher erläutert. Es zeigen Fig.1 eine Seitenansicht der erfindungsgemäßen Spalteinrichtung, Fig. 2 eine Draufsicht auf diese Einrichtung und Fig.3 eine Vordersicht der erfindungsgemäßen Spalteinrichtung. Fig.4 zeigt ein Detail der Lagerung der Griffe und Fig. 5 einen Schnitt gemäß Fig.4. Fig.6a,6b und 6c zeigen verschiedene Schaltstellungen der Schalteinrichtung.

Gemäß Fig. 1 umfaßt eine erfindungsgemäße Spalteinrichtung eine in einer Führung bzw. einem Gestell 14′ geführte, einen Spalthub F ausführende Spalteinheit, bestehend aus einem Spaltkeil 12 und einem Träger 13. Die Führung 14′ ist auf einem gegebenenfalls verfahrbaren Grundgestell 14 angeordnet, das auch den Antriebsmotor bzw. die Antriebseinheit 15 für die Spalteinheit 12 trägt. Die Antriebseinheit kann z.B. ein Motor, eine Hydraulikpumpe oder auch von anderer Art sein. Vorteilhafterweise wird eine Hydraulikeinrichtung vorgesehen, welche die Spalteinrichtung 12 13 mittels entsprechender Stellkolben im Gestell bzw. in der Führung 14′ höhenverstellt.

Mit zwei Griffen 1,1′, die in bzw. auf Lagerteilen 2,2′ gemäß den Pfeilen S,S′ einfahrbar bzw. ausziehbar sind, können die zu spaltenden Holzstücke mittels zweier Platten 8,8′, die von den Griffen 1,1′ getragen sind, erfaßt und auf dem Auflagetisch 16 positioniert werden. Darüber hinaus sind die Griffe 1,1′ auf den Lagerteilen 2,2′ gemäß den Pfeilen D,D′ verdrehbar gelagert.

Wie in Fig. 4 und 5 verdeutlicht, ist am Gestell 14′ bzw. an einem Ausleger 19 ein Lager 10 vorgesehen, in dem ein Rohrstück bzw. eine Welle 3′ um eine im wesentlichen horizontale Achse 17 verdrehbar gelagert ist, in welchem Rohrstück 3′ ein weiteres Rohr bzw. eine Welle 3 um die gleiche Achse 17 verdrehbar gelagert ist. Auf dem Rohr 3 ist auf der einen Seite des Lagers 10 in einer Bohrung 20 mittels eines Lagerstiftes 18 der Lagerteil 2 um eine zur Schwenkachse 7 senkrecht verlaufende Schwenkachse 9 gemäß dem Pfeil K (Fig. 2) im wesentlichen in einer Horizontalebene verschwenkbar gelagert. Auf dem Rohrteil 3′ ist in ähnlicher Weise mittels eines Lagerstiftes 18′ um eine im wesentlichen senkrecht zur Schwenkachse 17 verlaufende Schwenkachse 9′ der Lagerteil 2′ gemäß dem Pfeil K′ (Fig. 2) in der Horizontalebene verschwenkbar gelagert. Eine angedeutete Federeinrichtung 6 sorgt dafür, daß die Griffe 1,1′ in Offenstellung gedrückt werden, sofern sie nicht mit den Händen erfaßt sind. Wie Fig.1 zu entnehmen ist, sorgt eine weitere Federeinrichtung 6′ dafür, daß die Griffe 1,1′ in eine bestimmte vorgegebene angehobene Stellung rückverstellt sind, wenn sie nicht festgehalten sind.

Im Betrieb wird zweckmäßigerweise derart vorgegangen, daß das zu spaltende Holzstück auf dem Auflagetisch 16 positioniert wird und sodann jeweils ein Griff 1,1′ mit einer Hand ergriffen wird, daß die Griffe 1,1′ an das Holzstück angelegt werden und dieses während des Haltens mit den Griffen 1,1′ noch in eine bestimmte Endlage gebracht wird. Schließlich wird durch Absenken der Griffe 1,1′ in Richtung des Pfeiles A das Einschalten der Spalteinheit bewirkt.

Dieses Einschalten geht beispielsweise derart vor sich, daß an die Rohre bzw. Wellen 3,3′ Schaltzapfen 11,11′ angeformt sind, welche, wie in Fig.3 ersichtlich, parallel verlaufende Schaltstangen 4,4′ verstellen können. Die Zapfen 11,11′ können gelenkig mit den Schaltstangen 4,4′ verbunden sein; es reicht aber aus, wenn die Zapfen 11,11′ die Schaltstangen 4,4′ nach unten drücken können. Die unteren Enden der gegebenenfalls geführten Schaltstangen 4,4′ ruhen auf einer bzw. beaufschlagen eine Wippe 5 bzw. sind mit deren Enden gelenkig verbunden. Die Wippe 5 sitzt in ihrem mittleren Bereich auf einem höhenverstellbaren Schaltzapfen 7, mit dem die die Spalteinheit antreibende Hydraulik 12 betätigt bzw. in Betrieb gesetzt werden kann. Die Wippe 5 ist auf dem Schaltzapfen 7 verdrehbar gelagert, sodaß - wie in Fig.6a,6b und 6c in verschiedenen Betriebssituationen dargestellt - eine Verstellung des Schaltzapfens 7 nach unten nur dann möglich ist, wenn mit beiden Schaltstangen 4 und 4′ mit im wesentlichen gleichem Druck bzw. gleichzeitig die Wippe 5 belastet wird. Wenn - wie in Fig.6a und 6b dargestellt - nur mit einer Schaltstange die Wippe 5 belastet wird, so weicht dieses Ende der Wippe 5 nach unten aus, ohne daß eine Verstellung des Schaltzapfens 7 eintritt. Eine Verstellung des Schaltzapfens 7 entsprechend Fig.6c tritt nur dann ein, wenn beide Schaltstangen 4,4′ die Wippe 5 im wesentlichen gleichmäßig belasten. Endet der Druck einer oder beider Schaltstangen 4,4′ auf die Wippe 5, so verstellt sich der Schaltzapfen 7 durch entsprechende Federeinrichtungen oder durch den Druck in der Hydraulikeinrichtung in seine Ausgangsstellung zurück; die Spalteinheit 12 bleibt sofort während ihres Hubes stehen oder fährt in ihre Ruhelage zurück.

Fig.5 zeigt, daß in dem Lager 10 die Rohre bzw. Wellen 3,3′ mittels Halterungen 21 gegeneinander seitlich nicht verschiebbar gelagert sind. Das Lager 10 ist auf einer Auskragung 19 des Gestells 14′ angeordnet, während die Schaltstangen 4,4′ seitlich versetzt zum Gestell 14′ verlaufen. Dies ist von Vorteil, da üblicherweise direkt hinter dem Gestell 14′ die Antriebseinrichtung gelegen ist, die somit von den Schaltstangen 4,4′ nicht tangiert wird.

Die Oberflächen der Platten 8,8′ sind zumeist glatt oder nur leicht gerillt, um bei gleichzeitigem Halten des Holstückes die Abwärtsbewegung der Griffe 1,1′ durchführen zu können.

Im Hinblick auf eine mögliche Nachrüstbarkeit von derartigen Geräten ist die Anordnung von Schaltstangen 4,4' von Vorteil; es ist jedoch denkbar, daß die entsprechenden Steuerkreise der Hydraulikeinrichtung zur Betätigung der Spalteinheit 12 durch zwei Unterbrecherkontakte bzw. Unterbrecherschalter betätigt werden können, die nur bei gleichzeitigem Einschalten die Antriebseinrichtung in Betrieb setzen.

Es wird bemerkt, daß mit der erfindungsgemäßen Einrichtung auch andere Materialen als Holzstücke bearbeitet, insbesondere zerkleinert werden können. So können z.B. Kunststoff oder auch Metallteile geschnitten bzw. geteilt werden. Es ist aber auch möglich, anstelle des Spaltkeiles 12 einen Schneid-, Präge-, Preß- oder Stanzstempel oder ein anderes durch Druckbeaufschlagung arbeitendes Werkzeug vorzusehen und entsprechende Bearbeitungsschritte vorzunehmen. In allen Fällen werden Vorteile hinsichtlich der Bedienbarkeit und der Bedienungssicherheit erreicht. Die anhand einer Spalteinrichtung für Holzstücke beschriebenen Bearbeitungseinrichtung ist konstruktiv und funktionsmäßig gleich aufgebaut, wie Bearbeitungseinrichtungen für Materialstücke aus anderen Materialien auch bei allfälliger Verwendung von anderen Bearbeitungswerkzeugen 12 .

Es ist ferner möglich, auf der Auflage mit der Bearbeitungseinheit zusammenwirkende Werkzeuge, z.B. Formen, anzuordnen bzw. diese Werkzeuge gegebenenfalls gleichzeitig mit den Materialstücken mit den Griffen zu halten bzw. zu placieren.

## Patentansprüche

1. Bearbeitungseinrichtung, insbesondere Trenn- bzw. Spalteinrichtung vorzugsweise für Holzstücke, mit einer angetriebenen, einen Arbeitshub vollführenden Bearbeitungseinheit, insbesondere Spalteinheit, vorzugsweise einem Spaltkeil, einer Auflage, insbesondere einer(m) Spaltauflage bzw. -tisch, und Auslöse- bzw. Schalteinrichtungen für die Antriebseinheit der Bearbeitungseinheit, dadurch gekennzeichnet, daß die Bearbeitungseinrichtung, insbesondere Spalteinrichtung, zwei bewegbare Griffe (1,1') für die Bedienungsperson zur Halterung des zu bearbeitenden Materialteiles, insbesondere des zu zerkleinernden Holzstückes, aufweist, die gleichzeitig als Auslöseeinrichtungen für die Hubbewegung, insbesondere Spaltbewegung, der Bearbeitungseinheit, insbesondere Spalteinheit (12), ausgebildet sind.

2. Einrichtung nach Anspruch 1, dadurch gekennzeichnet, daß jeder Griff (1,1') auf einem Lagerteil bzw. -rohr (2,2') um seine Längsachse verdrehbar gelagert ist.

3. Einrichtung nach Anspruch 1 oder 2, dadurch gekennzeichnet, daß jeder Griff (1,1') auf seinem Lagerteil (2,2') ausziehbar bzw. einschiebbar gelagert ist.

4. Einrichtung nach einem der Ansprüche 1 bis 3, dadurch gekennzeichnet, daß jeder Griff (1,1') mit seinem Lagerteil (2,2') um eine im wesentlichen horizontal verlaufende Schwenkachse (17) höhenverschwenkbar gelagert ist.

5. Einrichtung nach Anspruch 4, dadurch gekennzeichnet, daß jeder Griff (1,1') mit seinem Lagerteil (2,2') um eine senkrecht zur Schwenkachse (17) verlaufende Achse (9) verschwenkbar gelagert ist.

6. Einrichtung nach einem der Ansprüche 1 bis 5, dadurch gekennzeichnet, daß die Griffe (1,1') Halteeinrichtungen, z .B. Platten (8,8'), Vorsprünge, Zahnreihen od.dgl., zur Halterung für die bzw. zur Anlage an den Werkstücken, insbesondere Holzstücke(n) tragen.

7. Einrichtung nach einem der Ansprüche 1 bis 6, dadurch gekennzeichnet, daß jeder Lagerteil (2,2') auf einem Rohr bzw. einer Welle (3,3') schwenkbar befestigt ist, wobei das eine Rohr (3') in dem anderen Rohr (3) verschwenkbar gelagert ist und das äußere Rohr (3) in einem Lager (10) am Gestell (14') der Bearbeitungseinrichtung, insbesondere Spalteinrichtung um die horizontale Schwenkachse (8) verschwenkbar ist.

8. Einrichtung nach einem der Ansprüche 1 bis 7, dadurch gekennzeichnet, daß bei Erreichen des unteren Schwenkbereiches beider Griffe (1,1') eine Einschalteinrichtung (7) für die Bearbeitungseinheit, insbesondere Spalteinheit (12) auslösbar bzw. in Einschaltstellung verstellbar ist.

9. Einrichtung nach Anspruch 8, dadurch gekennzeichnet, daß die Einschalteinrichtung (7) nur dann einschaltbar ist, wenn sich die beiden Griffe (1,1') gleichzeitig im unteren Endbereich ihres Schwenkweges

EP 0 438 997 B1

(A) befinden.

10. Einrichtung nach einem der Ansprüche 1 bis 9, dadurch gekennzeichnet, daß an jedem Rohr (3,3′) eine Schaltstange bzw. ein Nocken (11,11′) ausgebildet bzw. befestigt ist, mit denen jeweils ein, insbesondere vertikal verlaufender, Schaltstab (4,4′) verstellbar bzw. betätigbar ist, dessen unteres Ende jeweils mit einem Ende eine im wesentlichen waagrecht verlaufenden Wippe (5) zusammenwirkt, insbesondere mit diesem gelenkig verbunden ist, wobei die Wippe (5) in ihrem mittleren Bereich verdrehbar auf einem höhenverstellbaren Schaltstift bzw. -zapfen (7) für die Antriebseinrichtung der Bearbeitungseinheit, insbesondere Spalteinheit gelagert ist.

11. Einrichtung nach Anspruch 10, dadurch gekennzeichnet, daß der Schaltzapfen (7) in einer Richtung parallel zu den Schaltstäben (4,4′) verstellbar ist.

12. Einrichtung nach einem der Ansprüche 1 bis 11, dadurch gekennzeichnet, daß die Griffe (1,1′) bzw. ihre Lagerteile (2,2′) von zumindest einer Feder (6,6′) belastet in eine definierte angehobene und gespreizte Anfangslage verstellbar sind.


**Claims**

1. Treatment device, in particular separating or splitting device, preferably for pieces of wood, having a driven treatment unit performing a working stroke, preferably a splitting wedge (wood cleaver), a support, in particular a splitting support or table, and triggering and switching means for the driving unit of the treatment unit, characterized in that the treatment device, in particular the splitting device, is provided with two mobile handles (1, 1′) for the operator for holding the material part to be treated, in particular the piece of wood to be comminuted, said handles simultaneously being formed as triggering means for the stroke movement, in particular the splitting movement, of the treatment unit, in particular the splitting unit (12).

2. Device according to claim 1, wherein each handle (1, 1′) is supported rotatably about its longitudinal axis on a bearing element or bearing pipe (2, 2′).

3. Device according to claim 1 or 2, wherein each handle (1, 1′) is supported extendably and retractably on its bearing element (2, 2′).

4. Device according to any one of the claims 1 to 3, wherein each handle (1, 1′) with its bearing element (2, 2′) is supported pivotally in respect of height about a substantially horizontally extending pivot axis (17).

5. Device according to claim 4, wherein each handle (1, 1′) with its bearing element (2, 2′) is supported pivotally in relation to an axis ((9) extending perpendicularly to the pivot axis (17).

6. Device according to any one of the claims 1 to 5, wherein the handles (1, 1′) carry holding means, for instance plates (8, 8′), projections, rows of teeth or the like for holding or abutting on the work pieces, in particular the pieces of wood.

7. Device according to any one of the claims 1 to 6, wherein each bearing element (2, 2′) is pivotally attached to a pipe or shaft (3, 3′), the one pipe (3′) being pivotally supported within the other pipe (3) and the outer pipe (3) being pivotal about the horizontal pivot axis (17) in a bearing (10) on the frame (14′) of the treatment device, in particular the splitting device.

8. Device according to any one of the claims 1 to 7, wherein on reaching the lower pivot range of both handles (1, 1′), a switch-on means (7) for the treatment unit, in particular the splitting unit (12), is actuable or settable in switch-on position.

9. Device according to claim 8, wherein the switch-on means (7) cannot be switched on unless both handles (1, 1′) are simultaneously located in the lower end range of their pivot path (A).

10. Device according to any one of the claims 1 to 9, wherein a switch bar or cam (11, 11′) by means of which one each ,in particular vertically extending, switch rod (4, 4′) is adjustable or actuable,is formed or attached on each pipe (3, 3′), the lower end of said switch rod (4, 4′) each cooperating with one end of a substantially horizontally extending rocker (5), in particular articulated thereto, the rocker (5) being rotabably supported in its central region on an actuating bolt or pin (7) adjustable in respect of height for the driving means of the treatment unit, in particular the splitting unit.

11. Device according to claim 10, wherein the actuating bolt (7) is adjustable in a direction parallel to the switch rods (4, 4′).

12. Device according to any one of the claims 1 to 11, wherein the handles (1, 1′) and their bearing elements (2, 2′) are settable in a defined lifted and spread starting position loaded by at least one spring (6, 6′).

**Revendications**

1. Dispositif de traitement, en particulier dispositif de séparation ou de fendage , de préférence pour pans de bois, pourvu d'une unité de traitement, en particulier une unité de fendage, de préférence un coin à refendre, actionnée et effectuant une course motrice, et d'un appui, en particulier un appui de fendage ou une table de fendage et moyens de déclenchement et de commande pour l'unité de commande de l'unité de traitement, caractérisé en ce que le dispositif de traitement, en particulier le dispositif de fendage, est pourvu de deux poignées mobiles (1, 1′) pour l'opérateur pour tenir la pièce de matériel à traiter, en particulier le pan de bois à réduire en petits morceaux, les poignées simultanément formées comme déclencheurs pour le mouvement de commande, en particulier le mouvement de fendage, de l'unité de traitement, en particulier l'unité de fendage (12).

2. Dispositif selon la revendication 1, caractérisé en ce que chaque poignée (1, 1′) est supportée rotativement autour de son axe longitudinal sur un élément d'appui ou tuyau d'appui (2, 2′).

3. Dispositif selon la revendication 1 ou 2, caractérisé en ce que chaque poignée (1, 1′) est supportée sur son élément d'appui (2, 2′) de manière extensible ou escamotable.

4. Dispositif selon une des revendications 1 à 3, caractérisé en ce que chaque poignée (1, 1′) avec son élément d'appui (2, 2′) est supportée ajustable en hauteur de manière pivotante autour d'un pivot (17) s'étendant substantiellement horizontalement.

5. Dispositif selon la revendication 4, caractérisé en ce que chaque poignée (1, 1′) avec son élément d'appui (2, 2′) est supportée de manière pivotante autour d'un axe (9) s'étendant verticalement par rapport au pivot (17).

6. Dispositif selon une des revendications 1 à 5, caractérisé en ce que les poignées (1, 1′) portent des moyens de maintien, par exemple des plaques, (8, 8′), des saillies, des files de dents, etc., pour maintenir les pièces à usiner,en particulier les pans de bois, ou y porter bien.

7. Dispositif selon une des revendications 1 à 6, caractérisé en ce que chaque élément d'appui (2, 2′) est fixé de manière pivotante sur un tuyau ou sur un arbre (3, 3′), un des tuyaux (3′) étant supporté de manière pivotante dans l'autre tuyau (3) et le tuyau extérieur (3) étant pivotable autour de l'axe horizontal (17) dans un appui (10) au bâti (14′) du dispositif de traitement, en particulier dispositif de fendage.

8. Dispositif selon une des revendications 1 à 7, caractérisé en ce qu'en arrivant à la gamme inférieure de basculement des deux poignées (1, 1′), un moyen de démarrage (7) pour l'unité de traitement, en particulier l'unité de fendage (12), est déclenchable ou apte à être mis en position de démarrage.

9. Dispositif selon la revendication 8, caractérisé en ce que le moyen de démarrage (7) n'est déclenchable que si les deux poignées (1, 1′) se trouvent simultanément dans la gamme inférieure extrême de leur course de pivotement (A).

10. Dispositif selon une des revendications 1 à 9, caractérisé en ce qu'une perche de manoeuvre ou une came (11, 11′) est formée ou fixée sur chaque tuyau (3, 3′) et servant à ajuster ou commander une bielle de manoeuvre (4,4′) s'étendant en particulier verticalement et dont l'extrémité inférieure coopère avec une extrémité d'une bascule (5) s'étendant substantiellement horizontalement, en particulier articulée à laquelle, la bascule (5) étant supportée rotativement dans sa gamme centrale sur une broche de manoeuvre ou un pivot de manoeuvre (7) ajustable en hauteur pour le moyen de commande de l'unité de traitement, en particulier l'unité de fendage.

11. Dispositif selon la revendication 10, caractérisé en ce que le pivot de manoeuvre (7) est ajustable dans une direction parallèle par rapport aux bielles de manoeuvre (4, 4').

12. Dispositif selon une des revendications 1 à 11, caractérisé en ce que les poignées (1, 1') et leurs éléments d'appui (2,2') sont ajustables dans une position de départ élevée et écartée, chargées par au moins un ressort (6,6').

Fig. 5

Fig. 4